(19) Europäisches Patentamt
European Patent Office
Office européen des brevets

(11) **EP 2 234 232 A2**

(12) **EUROPEAN PATENT APPLICATION**

(43) Date of publication:
**29.09.2010 Bulletin 2010/39**

(51) Int Cl.:
***H02G 5/06*** *(2006.01)*

(21) Application number: **10156278.3**

(22) Date of filing: **12.03.2010**

| | |
|---|---|
| (84) Designated Contracting States:<br>**AT BE BG CH CY CZ DE DK EE ES FI FR GB GR HR HU IE IS IT LI LT LU LV MC MK MT NL NO PL PT RO SE SI SK SM TR**<br>Designated Extension States:<br>**AL BA ME RS**<br><br>(30) Priority: **27.03.2009 EP 09156418**<br><br>(71) Applicant: **ABB Technology AG**<br>**8050 Zürich (CH)** | (72) Inventors:<br>• **Holaus, Walter**<br>**8047 Zürich (CH)**<br>• **Smajic, Jasmin**<br>**8165 Schöfflisdorf (CH)**<br>• **Kostovic, Jadran**<br>**5430 Wettingen (CH)**<br><br>(74) Representative: **ABB Patent Attorneys**<br>**C/o ABB Schweiz AG**<br>**Intellectual Property (CH-LC/IP)**<br>**Brown Boveri Strasse 6**<br>**CH-5400 Baden (CH)** |

(54) **High-voltage device**

(57)     A high-voltage device (100) is provided that comprises a conducting element (121; 122; 123) for conducting high-voltage current and at least one transient reducing unit (130) for reducing voltage peaks of existing propagating very fast transients by the generation of arcing, the transient reducing unit having at least one arcing occurrence surface (131; 131a; 131b; 131c). The at least one arcing occurrence surface of the at least one transient reducing unit is positioned in the vicinity of the con- ducting element such that arcing occurs between the transient reducing unit and the conducting element when the potential difference between the transient reducing unit and the transient conducting element is above a threshold value, namely at the occurrence of a very fast transient. Further, a method is provided for equipping a high-voltage device with the transient reduction unit.

**FIG. 6**

**Description**

The present disclosure generally relates to a high-voltage device and method for equipping a high-voltage device with means for reducing very fast transients (VFTs). More particular, the present disclosure relates to a high-voltage switching or conducting device having means for reducing very fast transients and a method for equipping a switching or conducting device with means for reducing VFTs.

Switching operations with disconnectors in high-voltage gas-insulated switchgear generate very fast transients that propagate through the gas insulated switchgear (GIS) as travelling waves. Depending on the switching case and due to reflection and superposition, the peak values of the VFT can reach values up to the basic insulation level (BIL) of the GIS. Specifically the high rate-of-rise of VFT (e.g. about 200 kV within 10 ns) can lead to failures in equipment which is directly connected to the GIS as e.g. high-voltage transformers.

It is therefore an ongoing goal in the art to avoid the generation of very high VFTs or to apply solutions that result in the generation of VFTs as small as possible. In order to do so, disconnectors at ultra-high voltage (UHV) levels (e.g. above about 550 kV) are commonly equipped with VFT damping resistors of several 100 Ohms up to 1 kOhms. Parallel to the main contact of a disconnector, a further contact is provided on which a resistor is positioned. The contact is typically provided with a gap so that the current flows through arcing. The arrangement is such that, when the disconnector is closed, first the contact along the path comprising the resistor is engaged. The current flowing through the disconnector is therefore reduced in comparison to the situation when the disconnector is totally closed.

Hence, by providing these two circuits, the sudden rise of current through the disconnector can be softened. This results in the generation of a reduced VFT.

However, these resistors are typically placed in the contact system of the disconnectors. They therefore strongly increase the size and complexity of the disconnector. Further, they do not contribute to reducing existing VFTs but aim only at generating smaller VFTs during switching.

Further, In GIS designs, contacts in the active parts like e.g. plug contacts in busbars or contacts of switchgear like disconnectors are shielded by metallic shields. These shields aim at providing a good dielectric design. They are arranged in such a way that there is no current flowing through them and no active interaction such as arcing with any conducting element.

## SUMMARY OF THE INVENTION

In view of the above, a high-voltage device is provided that includes a conducting element for conducting high-voltage current and at least one transient reducing unit for reducing voltage peaks of propagating very fast transients that are propagating in the direction of the conducting element by the generation of arcing, whereby the transient reducing unit has at least one arcing occurrence surface and at least one permanent electric contact portion that is conductively connected to the conducting element. The at least one arcing occurrence surface of the at least one transient reducing unit is positioned in the direct vicinity of the conducting element such that intentional arcing occurs at VFT stress between the transient reducing unit and the conducting element when the transient potential difference between the transient reducing unit and the conducting element is above a threshold value.

Said threshold value depends on the kind of VFTs that shall be reduced and on the strength of the electric field generated in between the transient reducing unit and the conducting element, which electric field is required for the arcing process. Thus, an inventive embodiment according to the present invention comprises several transient reducing units, whereof at least two transient reducing units differ to one another in their geometry and/or size. The geometry and/or the choice of material for the transient reducing units or for parts/portions thereof is selectable in order to customize the desired different behaviour of the different transient reducing units in regard of the VFTs. Such an embodiment contributes to successfully reducing a variety of VFTs.

Depending on the envisaged VFTs and/or other particularities, the threshold value is in a range of about 5 kV to about 100 kV, in particular in a range of about 10 kV to about 80kV.

The transient reducing unit confers the conducting element with a locally distinct geometry. The transient reducing unit is shaped and dimensioned such that the waveguide propagation of at least one VFT-wave along the conducting element is affected, e.g. in that a VFT wave is dampened, i.e. reduced, or blocked. This damping effect is achieved by a local intentional arc discharge between said at least one arcing occurrence surface and a most proximate portion of the conducting element in its vicinity since the arcing consumes a portion of the energy of the VFT leading to a smoothened overall voltage course.

At the time the very fast transient wave, which is to be understood as a non-harmonic impulse rather than a single mono-frequent wave, passes the permanent electric contact portion of the transient reducing unit a change in the waveguide impedance is caused by the locally distinct geometry provided by the transient reducing unit. Said locally distinct geometry modifies the wave propagation in that a portion of the VFT wave is branched off the conducting element and led into the conducting body of the transient reducing unit. In case that the VFT wave passes the permanent electric contact portion first and the arcing occurrence surface thereafter the VFT wave propagates further along the conducting element very quickly and leaves the area of the transient reducing unit before the branched-off portion of the VFT wave reaches the arcing occurrence surface. This time offset/delay leads to distinctively different electric potentials of the conducting element and the conducting body of the transient reducing unit along the area where the transient reducing unit is arranged for a very short moment in time (typically within a few nanoseconds). Expressed differently arcing is caused for a particular VFT because of a transient potential difference at a given moment in time at the gap located in between the conducting element and the arcing occurrence surface of the transient reducing unit. Said transient potential difference is also referred to as $U_{diff}$ hereinafter. These different electric potentials, i.e. $U_{diff}$, cause an electric field between the transient reducing unit and the conducting element. As indicated above, said electric field is reduced subsequently by the arc discharge. The efficiency of the VFT damping depends mainly on the impulse steepness of the VFT and its maximum value. The higher $U_{diff}$ is, the more intense electric arcing at the gap occurs and thus the better the VFT damping is.

An electric field is created also in case that the VFT wave passes the arcing occurrence surface first and the permanent electric contact portion thereafter, since the electric potentials in the conducting element and the conducting body of the transient reducing unit are different from one another for a very short moment in time, too. Hence arcing will also take place if the VFT is propagating in the opposite direction in the conducting element than described above.

The geometry of the transient reducing unit defines the strength of the electric field and depends on parameters like the frequency or the frequency range of the VFT waves to be reduced and the choice of the gaseous insulating means present at the gap in between the arcing occurrence surface and the conducting element in terms of its dielectric value such that arcing occurs.

The at least one arcing occurrence surface and said at least one permanent electric contact portion where the transient reducing unit is conductively connected to the conducting element are displaced from one another by a distance which is shorter than the wavelength of the VFT wave to be dampened. Said distance extends in the direction of the VFT wave propagation, i.e. in the direction of a longitudinal axis defined by the conducting element. This axial displacement forms a parameter for the electric field to be generated.

Thus, said axial displacement as well as the size of the gap between the arcing occurrence surface and the conducting element form decisive parameters of said geometry of the transient reducing units. Further decisive parameters are the shape of the gap in between the arcing occurrence surface and the conducting element plus the size of an interior volume of the transient reducing unit. Said volume is mainly delimited by the body of the shell-like intermediate portion of the transient reducing unit and the conductor element itself and open at the gap in between the arcing occurrence surface and the conducting element. In a GIS environment, the interior volume contains an insulation gas that is allowed to circulate in and out of the interior volume through the gap.

The interior volume as well as the gap geometry are decisive for defining the resonance frequency $f_{res}$ of a transient reducing unit such that the energy of a VFT can be eliminated optimally. The following law applies for the resonance frequency $f_{res}$ of the resonator, where L is the equivalent lumped inductance and C the equivalent lumped capacitance of the unit.:

$$f_{res} = \frac{1}{2\Pi \times \sqrt{L \times C}}$$

Hereinafter, the term gap geometry is understood as the size and the shape of the gap formed in between the arcing occurrence surface and the surface of the conducting element. In terms of damping of a VFT, it is advantageous to have a resonance frequency in the lower portion of the VFT frequency range where the most dominant components of the VFT are located.

The equivalent lumped capacitance of the transient damping unit is determined by the size and shape of the arcing gap, as the electric field of the unit is confined in the narrow gap volume. Simulations and tests revealed that the damping efficiency rises the longer and smaller the gap in between the arcing occurrence surface and the conducting element is. This is easy to understand as a longer and smaller gap makes the corresponding capacitance higher and resonance frequency lower.

Good damping results are achievable, if the gap has a tunnel-like gap geometry with a gap length extending in a longitudinal direction defined by a longitudinal axis of the conducting element, wherein said gap length measures at least as much as the gap distance in between the arcing occurrence surface and said conducting element. In other words, the arcing occurrence surface of the transient reducing unit has a planar extension with respect to the surface of the conducting element such that a condenser is formed.

The equivalent lumped inductance of the damping unit is determined by the size of the interior volume. This is also easy to understand as the magnetic field of the unit is distributed over its volume (simulations show that the magnetic field is not so highly confined in the gap as the electric field but rather smoothly distributed over the transient reducing unit's interior volume). Thus, the larger the interior volume gets the higher inductance and lower resonance frequency is obtainable. As explained before, lower resonance frequency yield more efficient damping.

Increasing the interior volume can be done by either increasing an outer diameter of the transient reducing unit, e.g. at the intermediate portion, or by reducing the diameter of the conductor element at the place of the transient reduction unit, or both of these measures. The technical effect of an increased outer diameter of the transient reduction unit for a given VFT is twofold. First, it creates a longer current path length a VFT wave has to travel along within the transient reduction unit before reaching the arcing occurrence surface. Said longer current path length is responsible for an increased time offset of the amplitude of the VFT wave at the gap in the conducting element, e.g. the conductor bar, and the arcing occurrence surface of the transient reduction unit at a given moment in time. The larger said time offset is, the larger is the time shift voltage $U_{\Delta t}$ contributing to a larger transient potential difference $U_{diff}$ and thus to a more intense electric arcing at the gap that is advantageous for VFT damping. Second, increasing the outer diameter of the transient reduction unit for a given VFT leads to an increased interior volume and as a consequence thereof to an increased inductance of the resonator, lower resonance frequency and therefore higher transient potential difference $U_{diff}$.

Since the limits for the outer diameter are often given by the dielectric stress between conductor and enclosure, the VFT damping effect is further improvable by increasing the interior diameter without increasing the outer diameter of the transient reduction unit any further but by reducing an inner dimension of the conducting element proximate to the interior volume of the transient reducing unit locally by means of a recess. Depending on the embodiment of the transient reducing unit the latter is preferably of shell-like type. For instance, a shell plate may be arranged partly or completely around the conducting element in a predetermined distance such that it is encompassing and covering a longitudinal portion of the conducting element. As an example, the recess is formed by a circumferentially extending diminution, e.g. a neck portion, with a locally reduced diameter or a pocket. The limits for the reduced diameter causing said recess are given by the minimum conductor element cross section required by the current carrying capability. The recess leads to a local extension of the current path for VFTs that extends along the surface of the conductor element owing to the applying skin effect and thus affects time shift voltage $U_{\Delta t}$. Although the recess may lead to a decreased share of the time shift voltage $U_{\Delta t}$ on the transient potential difference $U_{diff}$, the increased interior volume contributes to an increased share of the resonant voltage portion $U_{RES}$ on the transient potential difference $U_{diff}$. Tests revealed that the resonant voltage portion $U_{RES}$ share is at least as large as the time shift voltage $U_{\Delta t}$, if not larger such that it outweighs its drawback on the time shift voltage $U_{\Delta t}$ typically by far. The damping efficiency rises the larger the interior volume size is.

In an embodiment of the transient reducing unit, the pocket may only partly encompass the conductor element in the circumferential direction leading to an asymmetric conductor element design when seen in the cross-section.

Since both the equivalent lumped capacitance and inductance of the damping unit are parameters independent from one another to a large extent they are subject to optimizations according to their requirements and specifics. However, a particularly satisfying damping efficiency for particular VFTs is achievable where both the interior volume and the gap geometry are optimized leading to a large resonant voltage share of the transient potential difference.

In an embodiment of the transient reducing unit, its intermediate portion of the transient reducing unit and the arcing occurrence surface extends not fully about the conducting element or the longitudinal axis but partially only. Depending on the space available and on further requirements, the shell-shaped transient reducing unit may extend about one fourth or one third of the circumference of the conducting element, for example. Other values may be applicable depending on the particularities. However, it is important that the interior volume in between the conducting element and an intermediate portion of the transient reducing unit remains above a minimal size threshold of the volume such that its function remains essentially unaffected. In this case where the transient reducing unit embraces the conducting element partially only, the gap geometry comprises also the virtual surfaces that extend laterally of the transient reducing unit in a radial direction with respect to the longitudinal axis in between the surface of the conducting element and the intermediate portion of the transient reducing unit. Again, the interior volume as well as the gap geometry form decisive parameters for defining the resonance frequency.

Regardless, whether the transient reducing unit fully embraces/surrounds the first conducting element in the circumferential direction in full or partially only, the arcing occurrence surface may be formed or may comprise at least one protrusion for defining the exact spot where arcing is triggered. Said at least one radially inwardly protruding nose-like protrusion contributes essentially to the gap geometry in that it reduces the gap distance between the arcing occurrence surface and the surface of the conducting element such that arcing will take place at exactly said spot.

If not only a single wavelength, i.e. frequency, of one particular VFT but a whole range of frequencies is to be reduced, the distance between the arcing occurrence surface and said at least one permanent electric contact portion is selectable accordingly. Depending on the embodiment of the high-voltage device, different transient reducing units may be appointed to address different ranges of VFT-frequencies.

Compared to prior art devices, the inventive high-voltage device does not necessarily need a resistor element, i.e. a resistor component, in order to reduce the VFTs and can therefore be provided without substantial room consumption. Hence, the transient reducing unit is substantially resistor-free. The placement of the transient reducing unit in the direct vicinity of the conducting element is understood as close enough in order to generate arcing once a VFT occurs. The term close enough is understood as closer or equal to 3 mm distance between the conducting element and the arcing occurrence surface in case of $SF_6$ gas as insulation means. Moreover, the term direct vicinity does not embrace a direct contact between conducting element and the transient reducing unit as this would not allow arcing to happen.

Further, the term the transient potential difference is to be understood as an electrical potential difference due to the existence of at least one VFT.

According to a further embodiment, the high-voltage device in accordance with the present invention features at least one transient reducing unit comprising at least two arcing occurrence surfaces.

According to a further aspect, a method for equipping a high-voltage device with means for reducing very fast transients is provided. The high-voltage device includes a conducting element and is adapted for conducting and/or switching high currents. The method comprises positioning at least one transient reducing unit for reducing voltage peaks of existing propagating very fast transients in the direct vicinity of a conducting element such that arcing is generated between the conducting element and at least one arcing occurrence surface of the at least one transient reducing unit when the potential difference between the transient reducing unit and the conducting element exceeds a threshold value. Said at least one arcing occurrence surface is arranged at an opposite end of at least one permanent electric contact portion of the at least one transient reducing unit to the conducting element.

Basically, the transient reducing unit according to the present invention is arrangable at any location along the conductor bar in the direction of the longitudinal axis as long as its functionality remains substantially untouched. It may also be integrated in GIS switchgear like disconnectors or circuit breakers.

The advantages addressed to in the above description relating to the high-voltage device apply likewise and/or analogously to the method, too. Thus a lengthy reiteration thereof in method claim language is omitted.

Further exemplary aspects, details, embodiments and advantages are evident from the dependent claims, the description and the accompanying drawings.

## BRIEF DESCRIPTION OF THE DRAWINGS

A full and enabling disclosure, including a best mode embodiment is set forth more particularly in the remainder of the specification including reference to the accompanying drawings wherein:

Fig.1 shows a cross sectional view of a section through a high-voltage device according to embodiments described herein;

Fig.2 shows a detailed illustration of an arcing region marked out in Fig. 1;

Fig.3 shows a cross-sectional illustration of a further transient reducing unit in the detail view as shown in figure 2;

Fig.4 shows a cross-sectional illustration of a further transient reducing unit in the detail view as shown in figure 2;

Fig.5 is a three-dimensional illustration of a conductor being surrounded by a plate-shaped transient reducing unit according to a further embodiment;

Fig.6 is a cross-sectional illustration of a housed conductor being provided with transient reducing units according to embodiments described herein;

Fig.7 is a schematic three-dimensional illustration of an open wire being provided with transient reducing units according to embodiments described herein;

Fig.8 is another schematic three-dimensional illustration of a transient reducing unit connected on a conductor, wherein the arcing occurrence surface features a small protrusion for defining the exact spot where arcing is triggered;

Fig.9 is a schematic three-dimensional illustration of a transient reducing unit connected on a conductor, wherein the transient reducing unit is rotationally asymmetric with reference to the longitudinal axis;

Fig.10    is a schematic two-dimensional illustration of a transient reducing unit similar to the one shown in Fig.2;

Fig.11    is a schematic two-dimensional illustration of a further transient reducing unit whose interior volume is increased by a recess that is engirding the conductor; and

Fig.12    shows measurement results of VFTs in a high current device comprising a transient reducing unit according to embodiments described herein in comparison to a high voltage conducting device not having a transient reducing unit.

## DETAILED DESCRIPTION OF THE INVENTION

Reference will now be made in detail to the various exemplary embodiments, one or more examples of which are illustrated in the drawings. Each example is provided by way of explanation and is not meant as a limitation. For example, features illustrated or described as part of one embodiment can be used on or in conjunction with other embodiments to yield yet a further embodiment. It is intended that the present disclosure includes such modifications and variations.

A number of embodiments will be explained below. In this case, identical structural features are identified by identical reference symbols in the drawings. The structures shown in the drawings are not depicted true to scale but rather serve only for the better understanding of the embodiments.

For the purposes of this application, high-voltage devices include high-voltage and high-power switching and/or conducting devices, switches with or without arc quenching, disconnectors, grounding devices as well as further switching devices from the field of high-voltage technology. Further, a conductor, a conducting device, or a conducting element as described herein refers typically to a high-voltage conductor that is normally arranged within a housing. A conducting device can be e.g. a busbar, in particular in a switching device, or e.g. a plug contact in a busbar etc. The conducting element is for continuously transporting a current through it.

The drawings describe the present disclosure exemplarily in connection with exemplary embodiments of switching devices and conducting devices. More particular, a person skilled will understand that embodiments described herein can generally be applied to all apparatuses adapted for high-voltage applications. The term high-voltage device is used for enclosing both high-voltage switching devices and high-voltage conducting devices.

According to embodiments described herein, at least one transient reduction unit is provided. According to the present disclosure, it is desired to reduce already existing propagating VFTs, i.e. to reduce them after they have already been generated. In order to do so, the transient reducing unit is positioned in a specific distance close to conducting element. The gaps between the end of the transient reduction unit and the conducting element are sized such that sparking occurs intentionally at VFT stress.

Typically, the transient reducing unit is sized and positioned according to the present invention such that it is adapted for arcing to happen due to the occurrence of VFT only. In other words, the transient reducing units is not supposed to conduct high current during switching. High current would e.g. be conducted if the transient reducing unit were positioned parallel to the main contact of a disconnector circuit for providing a parallel connection during switching (see background section).

According to typical embodiments of the present invention, this sparking is placed at positions, where the sparks do not harm the function of the electrical application such as the switch gear. As it is possible to provide many transient reduction units along a switching or conducting device, and as the VFTs are reflected many times at each switching operation, many sparks will occur. Each spark consumes a small portion of energy from the VFT thus reducing peak and/or rate of rise of the VFT.

The terms "arcing" and "sparking" are used synonymously hereinafter. They typically embrace all kind of spark generation between two elements. Arcing may happen through air, insulating gas, or an insulating solid.
According to embodiments, in order to avoid particle generation, the parts of the transient reducing units at the location where the intended sparking at VFT stress takes place may be free of coating and/or painting. In many embodiments, the spark energy is sufficiently small, so that material erosion of metal parts does not occur.

The transient reduction unit may have different geometries like toroid shape, different cross sections, different diameters, spiral wound shields etc. dependent on the intended sparking for a variety of VFT stress.

When VFTs propagate along the conducting element in a direction of a longitudinal axis 180 being defined by the conducting element, they generate a transient potential difference between the end of the transient reducing unit and the conducting element. If the distance between the transient reducing unit and the conductor is small, then this transient potential difference may lead to small sparks in this small gap.

A suitable distance between conducting element and the transient reducing unit is larger than about 0.2 mm, more particularly larger than about 0.3 mm and more particularly larger than about 0.5 mm when employing $SF_6$ gas as the insulation means.

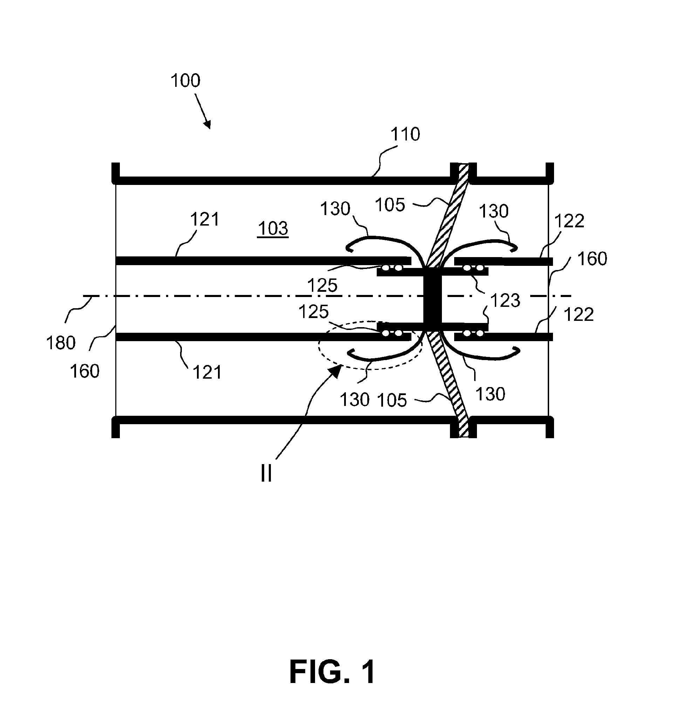

A suitable maximum distance for the gap 303 formed in between the conducting element and the transient reducing unit is about 3 mm, more particular about 2 mm, or even more particular 1 mm, these sizes typically refer to insulated devices such as by $SF_6$ insulation. In air insulated devices, the maximum distances will measure about 10 mm, more particular about 5 mm, or even more particular 1 mm. As to been seen in figures 1 to 7, the distances referred to are measured about perpendicular to a direction of a longitudinal axis 180 defined by a housing and/or a conducting unit respectively.

The distance between the conducting element and the transient reducing unit is defined as the distance between those two parts on the conducting element and the transient reducing unit that are closest to each other. Typically, the arcing occurs between these two parts. This part on the transient reducing unit shall be called "arcing occurrence surface" herein.

Fig. 1 shows a typical plug contact in a GIS busbar according to embodiments described herein. It is to be understood that it could also be a cross-shaped or T-element instead of a straight connection. Generally, this busbar as shown serves for joining up individual GIS components.
The switching device illustrated in Fig. 1 is in the form of a module of a gas-insulated, encapsulated assembly and has a housing 110, which may be made of metal, filled with an insulating gas such as $SF_6$. Typically, there are two main openings 160. These openings are each sealed in a gas-tight manner by a barrier insulator in a manner which is electrically insulated from the housing 110.

In the embodiment of Fig. 1, the first conducting element 121 is connected to the second conducting element 122 via the third conducting element 123 (in the embodiment of Fig. 1 the inner conductor). Plug contacts 125 maybe provided. Typically, the third conducting element is fixed within the housing via insulator 105. The first conducting element 121 and the second conducting element 122 are movable in relation to each other in order to allow a compensation of heat expansion, vibrations during operation and tolerances in the lengths of specific components.

As can be seen in Fig. 1, the switching device further comprises transient reduction units 130. According to typical embodiments described herein, the transient reduction unit can be formed as bent shields. The transient reduction units serve to reduce very fast transients once they occur. In order to do so, the transient reduction units are positioned in the direct vicinity of the conducting elements. They have to be positioned close enough for arcing to occur at VFTs. They have generally to be electrically contacted by a permanent electric contact portion 150 to the conducting element on one side in order to avoid partial discharges during normal operation.

Further, as the transient reducing units are typically on a high potential and the housing is on ground potential, arcing between transient reducing unit and housing has to be avoided. According to typical embodiments described herein, the transient reducing unit has therefore a shape that is bent away from the closest wall of the housing, as it is exemplarily shown in Fig. 1.

As the transient reducing units are typically always connected to a conducting element on one side, i.e. at an end portion thereof, such as the third conducting element 123 in Fig. 1, sparking in the gap will not occur during normal operation or during impulse voltage testing but only at VFT stress.

Generally, the transient reducing unit is on the same potential as the conducting element which it is positioned close to. That is, according to typical embodiments, the transient reducing unit is in electrical contact with that conducting element which it is positioned close to. Nonetheless, once a VFT occurs, due to the enormous change of voltage over time (dV/dt may be up to some hundred kV per 10ns), a potential difference exists temporarily (and locally) between the respecting conducting element and the arcing occurrence surface of the transient reducing unit. The conducting element and the transient reducing unit seek to compensate for this difference resulting in a temporarily increase of the electric field distribution and subsequent intentional arcing therebetween. Hence, although the transient reducing unit and the conducting element are generally on the same potential, a potential difference may exist between them for very short times (typically up to maximally 100 ns). This potential difference is called the transient potential difference herein.

Mechanically, the transient reducing unit may be mounted to the identical conducting element which it is positioned close to, or to another conducting element.

The most suitable distance between the conducting element and the arcing occurrence surface of the transient reducing unit, in other words the gap size, depends on the specific high voltage application, the density of the insulating gas, the kind of insulating gas (e.g. air or $SF_6$) and the like. However, generally, a detailed high-frequency model of the relevant switch gear parts and calculations therewith may be used to determine suitable geometries. Thereby, suitable gap sizes and/or suitable transient reducing unit geometries may be determined such as toroid shape, bigger and smaller cross section, different diameters, spiral shaped geometries etc. In particular, as already mentioned, the gap size may be in a range between about 0.2 mm and about 3.0 mm, more particular in a range between about 1.0 mm and about 1.5 mm.

It is typical for the present invention that the gap between transient reducing unit and conducting element is filled by an insulator of any kind. For instance, if the switching/conducting device is embedded in insulating gas such as $SF_6$, the gap may consist of this gas. In other embodiments, an insulating solid is positioned between transient reducing unit and conducting element. The solid acts both as insulator and as spacer.

The present disclosure proposes intentionally allowing arcing to occur in order to reduce the high voltage peaks. At each arcing occurrence between conducting element and transient reduction unit, energy is consumed and absorbed. Therefore, depending on the number of transient reducing units, it is possible to damp the VFTs rather effectively.

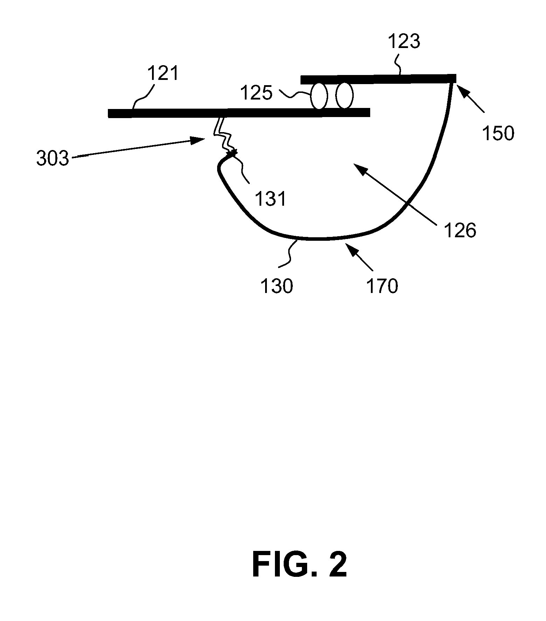

Fig. 2 shows an enlargement of the region between transient reduction unit 130 and the conducting element 121 as indicated by the dotted ellipse II of Fig. 1. As indicated by the two jagged arrows, arcing occurs between the tip 131 of the transient reduction unit 130 and the conducting element 121. A gap 303 is laterally delimited by the arcing occurrence surface 131, i.e. its tip 132, and the conducting element 121. The shell-like transient reduction unit 130 extends in the circumferential direction about the conducting element.

The transient reducing unit may be made of any conducting material. Good results are achievable if it is a non-magnetic material or it has at least not a high magnetic permeability (for instance, it can be a diamagnetic and/or a paramagnetic material). Typical materials used are e.g. aluminum, pure or in a composition, or other conductors such as copper and its compositions, i.e. copper alloys.

In the event that the transient reducing units are positioned in the periphery of a disconnector itself, the reduction of VFTs is intended to happen both at closed switchgear and at open switchgear. In the open situation this is true, of course, only for that side of the disconnector that is not on ground potential.

The transient reducing unit 130 is of shell-like shape and extends in the circumferential direction about the conducting element 121. An interior volume 126 that is confined laterally by the transient reducing unit 130 and the conductor element 121 is formed at the time of attaching the transient reducing unit 130 to the conducting element 121 in the permanent electrical contact area 150.

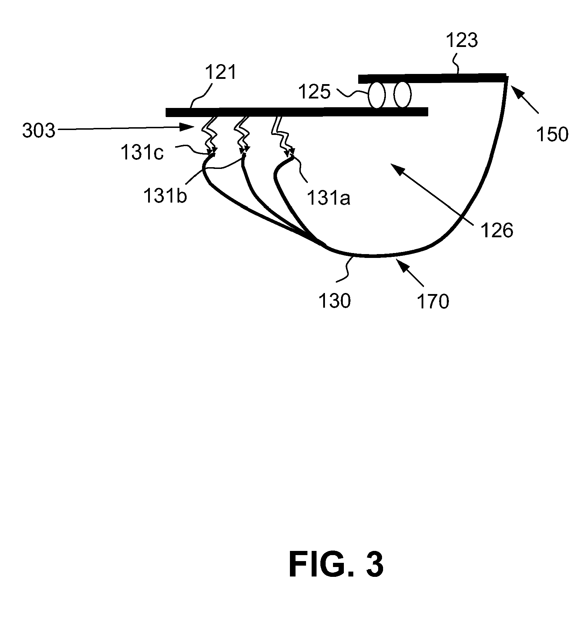

The embodiment shown in Fig. 3 differs to the embodiment as shown in Fig. 2 in that the tip end of the transient reduction unit 130, i.e. the tip end being opposite of the permanent electrical contact portion 150 features a claw-like shape when seen in the longitudinal section along the longitudinal axis 180 as it splits up into three tips comprising an arcing occurring surface 131a, 131b and 131c each. Thus this embodiment features an enlarged arcing occurring surface compared to the embodiment as shown in Fig. 2.

Good VFT damping results are achievable if said conducting element 121, 122, 123 defines a longitudinal axis 180 and wherein said at least one transient reducing unit (130) is shaped such that an intermediate portion 170 of the transient reducing unit 130 is positioned transversal, i.e. radial to said longitudinal axis 180 more remote than the at least one arcing occurrence surface 131, 131a, 131b, 131c. This is valid also for the other embodiments addressed in this description.

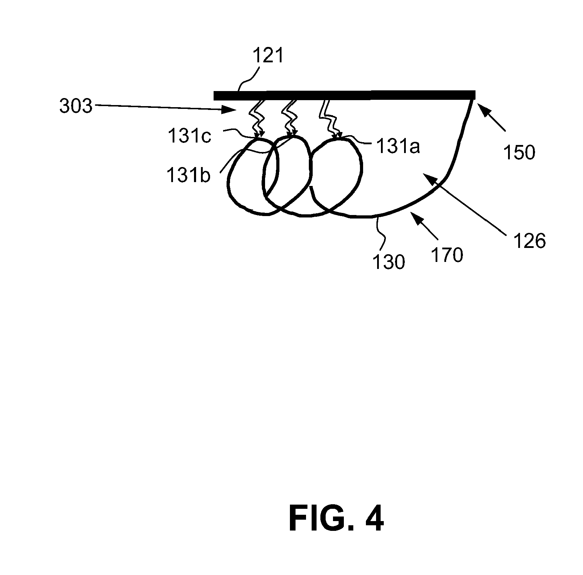

Fig. 4 shows a transient reducing unit being formed as a spiral. In Fig. 4, the transient reducing unit comprises three arcing occurrence surfaces 131a, 131b, and 131c. It is generally possible that a transient reducing unit according to the present disclosure comprises e.g. at least two, three, five or even ten arcing occurrence surfaces. Moreover, according to some embodiments, transient reducing units with even more than ten, hundred or even thousand arcing occurrence surfaces are possible.

In typical embodiments according to the present invention, it is desired to have at least two, more typically at least five or even ten transient reduction units provided within a switching and/or conducting device. Thereby, a transient reduction unit is defined as each unit that allows arcing to occur at its arcing occurrence surface at VFT stress.

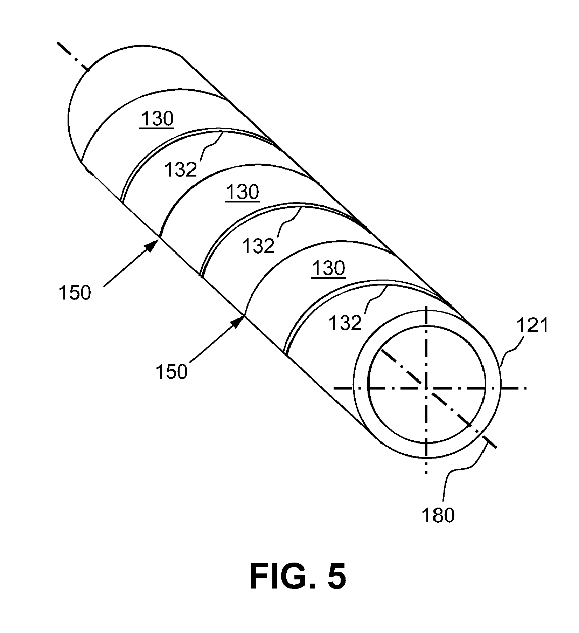

Fig. 5 shows an embodiment of a transient reduction unit with a large arcing occurrence surface. The conducting unit 121 is surrounded by a wound conductor plate that acts as a transient reducing unit 130. The transient reducing unit is spaced apart from the conducting unit 121 by at least 0.2 mm and/or preferably not more than 3 mm. A strip-like spacer 132 may be provided that can be made of any insulating material. The connection of the transient reduction unit to the conducting element is not shown in Fig. 5. Generally, it could be positioned on either end of the conducting element, or, alternatively, somewhere in the middle with regard to the longitudinal axis 180 of the conducting unit 121.

Generally, the spiral wound transient reducing unit may enclose the conducting element in its center, such as in the example of Fig. 5, or be arranged off-axis of the conducting element having several arcing occurrence surfaces close to the conducting element (such as in the embodiment of Fig. 4).

The cross-section of the transient reducing unit may be of circular or plate-like shell shape. For instance, a shell plate may be arranged partly or completely around the conducting element in a predetermined distance.

During operation, once a VFT occurs, arcing occurs between the wound plate shaped transient reducing unit as illustratively shown in Fig. 5 at many positions thereby reducing the voltage peaks essentially. Typically, the transient reducing unit is connected to the same conducting unit it is arranged around.

According to other embodiments, the transient reducing unit is connected to another conducting unit. This may even enlarge the temporary potential difference at VFT stress.

The diameters of spiral shaped VFT orientate on the diameters of the respective conductor elements.

According to various embodiments described herein, the overall surface of the transient reducing unit according to various embodiments described herein is e.g. more than about 10 $cm^2$ per meter conducting element. Generally, the whole high-voltage device may have an overall surface of said at least one transient reducing unit of at least about 0.1 $m^2$, in particular at least about 0.5 $m^2$.

The possible reduction of VFTs depends very much on the available total surface for arcing. Therefore, it is suitable to provide a transient reducing unit with a large available total surface. The available total surface may consist of the surface of one transient reducing unit (as in the example of Figs. 1, 2, and 5) extending mutually over the intermediate portion (170) of the transient reducing unit (130) when seen in the direction of the longitudinal axis, or may be made up of the arcing occurrence surface of several transient reducing units (as in the example of Figs. 3 and 4).

In more detail, with respect to conducting units, it is suitable to provide at least about 100 cm$^2$ per meter conducting unit, more particular at least about 10 dm$^2$ per meter conducting unit and even more particular at least about 1 m$^2$ per meter conducting unit in the longitudinal direction of the conducting unit 121.

According to embodiments, at least 10%, more particular at least 25%, and even more particularly at least 50% of the conducting element is surround or at least partially surrounded/covered by the at least one transient reducing units. Favourably this is achievable in that the transient reducing units are shaped planar shell elements like, e.g. shield-like shells.

By providing transient reducing units according to the present disclosure to a conducting element, it is possible to allow the reduction of VFTs in a self-regulated process. If there are no or little VFTs, there will not be any arcing so that no electric energy is consumed up. In the event of VFTs, arcing occurs. The higher the voltage of a VFT, the more arcing and thus energy consumption happens.

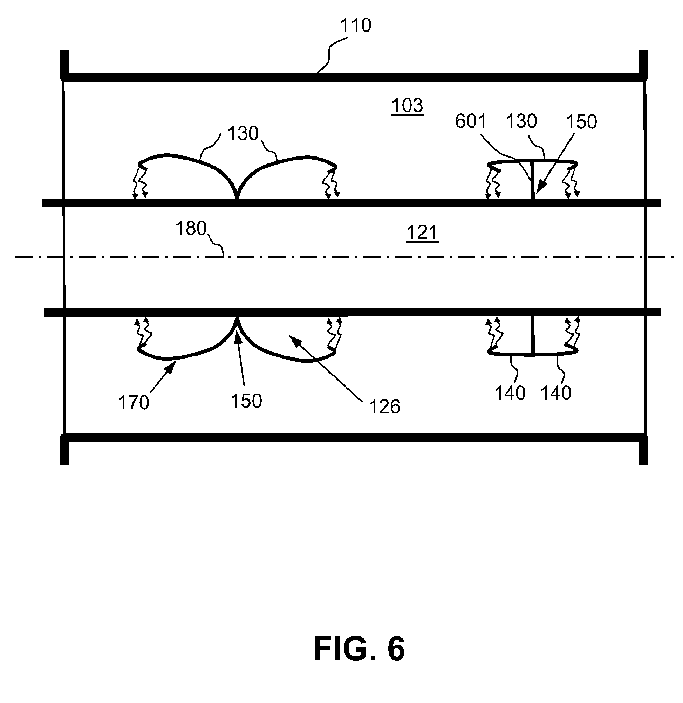

Fig. 6 is a further embodiment showing the cross-sectional view of a conducting element 121 similar to Fig. 1. The conducting element is enclosed in a housing 110 that is filled with an insulating gas 103.

There are two embodiments of transient reducing units 130 shown in Fig. 6. The left one is similar to what was shown in Figures 1 and 2. As can be seen, the transient reducing units are mechanically and electrically contacted with the conducting element. Nonetheless, as explained previously, local and temporary differences in the potential result in the generation of arcings (which are depicted as jagged arrows in Fig. 6).

Another example of a transient reducing unit 130 is shown on the right side of Fig. 6. The transient reducing unit has a T-shape when seen in a cross-section along the longitudinal axis 180 defined by the housing 110 and the conducting element 121. In comparison to the transient reducing unit on the left side, it has only one mounting 601 to the conducting element. An advantage of the transient reducing unit on the right side having only one common mounting 601 for two transient reducing wing portions 140 resides in a simplified and thus more economic assembly of the transient reducing unit on the conducting element 121. Expressed differently, this high-voltage device features at least one transient reducing unit 130 comprising at least two wing portions 140 that are in a permanent electric contact with said conducting element 121, 122, 123 via the common mounting 601.

The embodiment of Fig. 6 is shown in a cross-sectional view. It is to be understood that, also in other embodiments, the transient reducing unit may encircle the complete, preferably circular conducting element. The arcing occurrence surface is thus preferably designed in the shape of a ring around the conducting element. According to other embodiments, the transient reducing unit encircles the conducting element only partly.

Since the two transient reducing units shown in Fig. 6 feature different geometries which are directed to different VFTs it becomes possible to employ such a set-up on purpose to reduce a variety of at least two different VFTs.

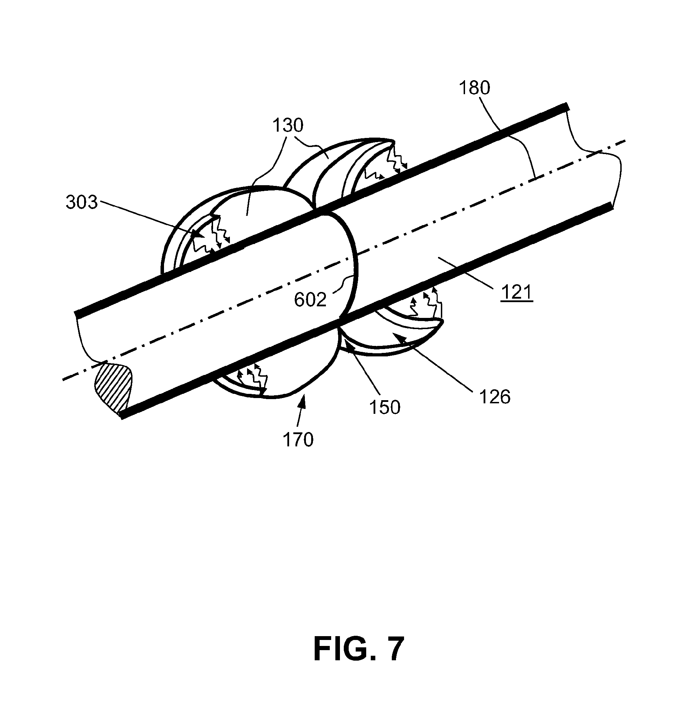

Fig. 7 shows exemplarily an open wire used in overhead lines or within a high voltage substation or switchgear. Typically, no housing is provided that embraces the conducting element like in a gas insulated substation.

As can be seen in Fig. 7, a transient reducing unit 130 is provided on the conducting element 121. The transient reducing unit is fixed to the conducting element with the help of the embracing ring 602. There is only a comparatively small circumferential portion of the transient reducing unit 130 shown in Fig. 6, i.e. the portion located in a longitudinal section in the direction of the longitudinal axis 180. Typically, between the arcing occurrence surface and the conducting element, air is present through which arcing occurs at VFTs. This is exemplarily indicated with jagged arrows between the transient reducing unit tips and the conducting element. For instance, the conducting element shown could be part of an air insulated switchgear (AIS). Like in previous embodiments, the shell-like body of the transient reducing unit extends fully about the bar-like conducting element in the circumferential direction but is cut partially out for better visibility of the shape and function only.

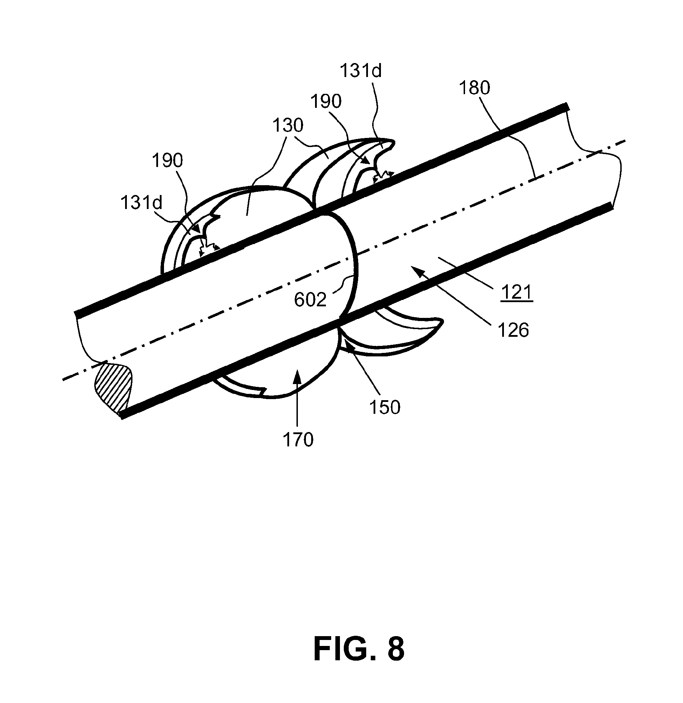

Fig. 8 shows another alternative embodiment of the transient reducing unit 130. Since this embodiment is similar to the one shown and described with reference to Fig. 7, only the differences will be discussed hereinafter. The arcing occurrence surface 131d comprises at least one protrusion 190 for defining the exact spot where arcing is triggered. In other words, since the radially inwardly protruding nose-like protrusion 190 reduces the gap distance between the arcing occurrence surface 131d and the surface of the conducting element 121, arcing will take place at exactly said spot. Depending on the requirements the at least one protrusion 190 can be arranged at literally any place of the arcing occurrence surface as well as the intermediate portion 170. Like in previous embodiments, the shell-like body of the transient reducing unit extends fully about the bar-like conducting element in the circumferential direction but is cut partially out for better visibility of the shape and function only.

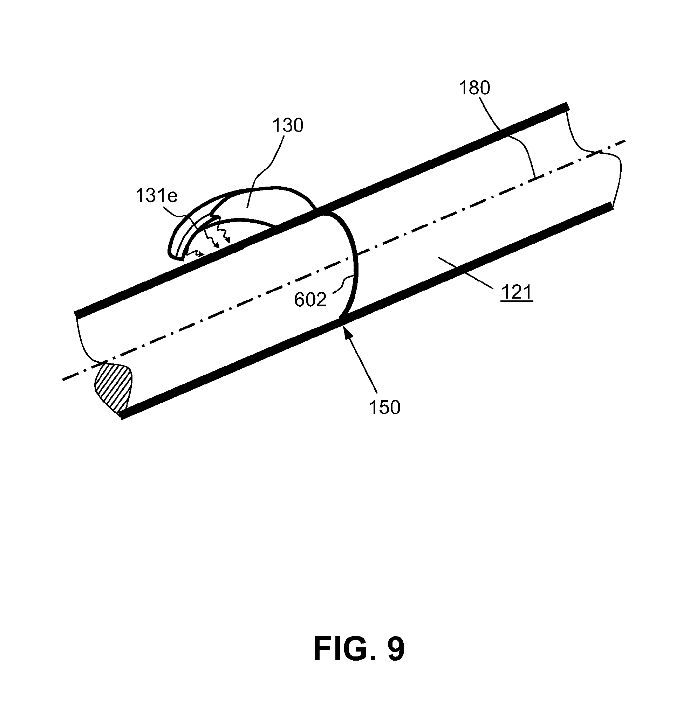

The further embodiment of the transient reducing unit 130 shown in Fig. 9 differs to the transient reducing unit 130 shown in Fig. 7 in that the intermediate portion 170 of the transient reducing unit 130 is not extending fully about the conducting element 121 but partially only. Thus the intermediate portion 170 and the arcing occurrence surface 131e extend about one third about the conducting element 121 in the circumferential direction.

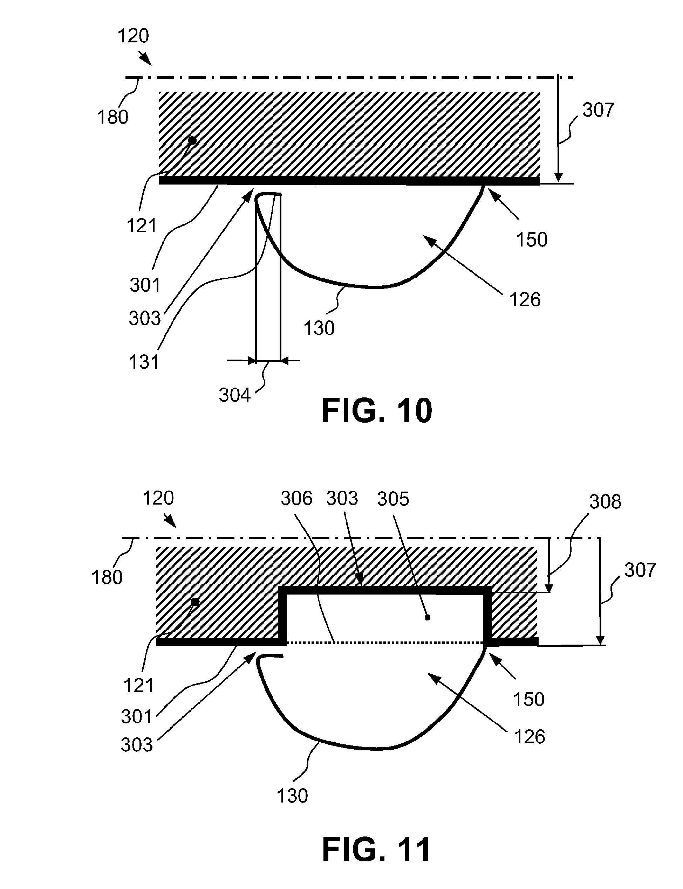

The transient reducing unit shown and explained with reference to Fig. 10 differs to the one shown in Fig. 2 only in the gap geometry and in that the conducting element 121 is shown in hatched style indicating a longitudinal section of the view shown in Fig. 10. The shell-like body portion of the transient reducing unit 130 is shown as a thick line only as its thickness is very thin compared to the dimensions of the conducting element 121. The conducting element 121 is a conductor bar with a circular cross-section that defines the longitudinal axis 180. The conducting element 121 has a outer surface 301 along which the VFT propagates due to the skin effect. Said outer surface 301 has an outer conductor dimension 307. Here the dimension is a radius. The interior volume 126 is delimited by the outer surface 301, the intermediate portion of the transient reducing unit 130 and the gap 303. In this embodiment, the shell-like body of the transient reducing unit 130 is bent inwardly at an end opposing the permanent electric contact 150 such that it extends about parallel to the outer surface 301 for a gap length 304 that measures about three times the dimension of the gap distance between the arcing occurrence surface 131 and the adjacent outer surface 301 of the conductor element 121. However, a multipart-solution of the elements 170 and 131 is conceivable. That tunnel-like gap geometry contributes to a resonant voltage share of the transient potential difference by means of the increased capacitance. In this embodiment, the whole transient reducing unit 120 comprises the shell-like transient reducing unit 130 as well as a portion of the outer surface 301 of the conductor element 121.

The further transient reducing unit shown in Fig. 11 differs to the one shown in Fig. 10 in an increased interior volume 126. The remaining elements and purposes remain untouched such that previous explanations thereof apply and a repetition can be omitted. The conductor element 121 comprises a circumferential recess 300 located adjacent to the interior volume 126. Since a base dimension 308 is smaller than the outer dimension 307 of the conductor element 121, an additional partial volume 305 is formed. A dotted line 306 is indicating a virtual extension of the outer surface 301 for displaying the share of the additional partial volume 305 on the increased overall interior volume 126 in comparison to the interior volume shown in Fig. 10. Compared to the embodiment shown in Fig. 10, said additional partial volume 305 contributes to an increase of the resonant voltage portion/share on the transient potential difference by means of the increased inductance. In this embodiment, the whole transient reducing unit 120 comprises both the shell-like body portion of the transient reducing unit 130 as well as the recess 300 in the conductor element 121 plus some minor portion of the outer surface 301.

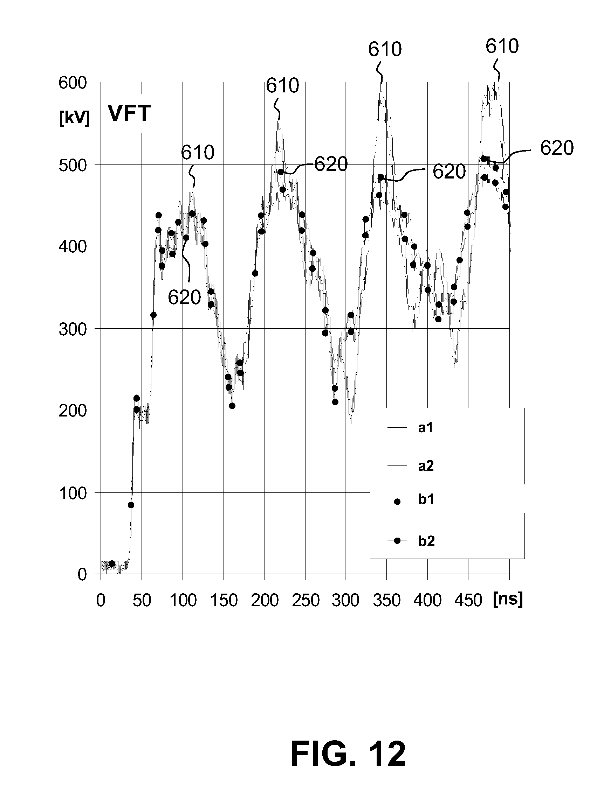

Fig. 12 exemplarily shows measuring results on a test-set up with and without VFT damping as described herein. The voltage at the high-voltage device is measured and depicted over the time for a short time interval of about half a microsecond.

A VFT oscillates resulting in voltage peaks 610 in the case of no VFT damping (two instances a1 and a2 were measured). These peaks have been measured to be up to 600 kV.

The same two VFTs are generated for the test and the resulting voltage is measured wherein transient reducing units as described herein are provided in the high-voltage device. The voltage peaks for these two measured instances with VFT damping are referred to by number 620 in Fig. 12. In operation, at the occurrence of VFTs, arcing occurs at higher voltages thereby consuming energy and reducing the peak voltage. This effect becomes more and more recognizable over the time. This is because at the occurrence of the first VFT, the effect of drawing energy from the system by providing the transient reducing units and therefore allowing sparks to occur begins. At that point in time the reduction of the peak voltage is hardly recognizable. However, after the first VFT peak, even more after two or three peaks, it is evidently recognizable in the figures how much the peaks could be reduced in comparison to the situation with no provision of a transient reducing unit. In the example shown in Fig. 6, the maximum VFT peak could be reduced by about 100kV which is an essential improvement in a high voltage switching device. Thus it can be seen that the present invention contributes essentially to equalizing the average voltage in case of VFTs.

The invention has been described on the basis of embodiments which are shown in the appended drawings and from which further advantages and modifications emerge. However, the disclosure is not restricted to the embodiments described in concrete terms, but rather can be modified and varied in a suitable manner. It lies within the scope to combine individual features and combinations of features of one embodiment with features and combinations of features of another embodiment in a suitable manner in order to arrive at further embodiments.

It will be apparent to those skilled in the art, based upon the teachings herein, that changes and modifications may be made without departing from the disclosure and its broader aspects. That is, all examples set forth herein above are intended to be exemplary and non-limiting.

**Claims**

1. A high-voltage device (100) comprising:

a conducting element (121; 122; 123) for conducting a high-voltage current; and

at least one transient reducing unit (120, 130) for reducing voltage peaks of existing propagating very fast transients by the generation of arcing, the transient reducing unit having at least one arcing occurrence surface (131; 131a; 131b; 131c; 131d; 131e) and at least one permanent electric contact portion (150) being conductively connected to the conducting element (121; 122; 123),

wherein said at least one arcing occurrence surface (131; 131a; 131b; 131c) of said at least one transient reducing unit (130) is positioned in the vicinity of said conducting element (121; 122; 123) such that arcing occurs in a gap (303) located in between said transient reducing unit and said conducting element when the transient potential difference between said transient reducing unit and said conducting element is above a threshold value.

2. The high-voltage device in accordance with claim 1, wherein said transient reducing unit (120, 130) is substantially resistor-free.

3. The high-voltage device in accordance with claim 1 or 2, wherein said transient reducing unit (120, 130) is dimensioned such that its geometry causes a change in the waveguide impedance at the time a very fast transient wave is propagating along the conducting element and the transient reducing unit.

4. The high-voltage device in accordance with any of the preceding claims, wherein said threshold value is in a range of about 5 kV to about 100 kV, in particular in a range of about 10 kV to about 80kV.

5. The high-voltage device in accordance with any of the preceding claims, wherein said arcing occurrence surface (131; 131a; 131b; 131c; 131d; 131e) of said at least one transient reducing unit (120, 130) is positioned in a distance of maximally 3 mm from said conducting element (121; 122; 123), more preferably maximally 2 mm from said conducting element (121; 122; 123).

6. The high-voltage device in accordance with any of the preceding claims, wherein said arcing occurrence surface (131; 131a; 131b; 131c; 131d; 131e) of said at least one transient reducing unit (120, 130) is positioned in a gap distance of minimally 0.2 mm from said conducting element (121; 122; 123), more preferably minimally 0.5 mm from said conducting element (121; 122; 123).

7. The high-voltage device in accordance with any one of the preceding claims, wherein at least two transient reducing units (120, 130) are provided and wherein the at least one permanent electric contact portion (150) is displaced from its dedicated at least one arcing occurrence surface (131; 131a; 131b; 131c) by a distance in the direction where the conducting element (121; 122; 123) extends, which distance is shorter than a wavelength of the VFT to be dampened.

8. The high-voltage device in accordance with claim 6, wherein the at least two transient reducing units (120, 130) differ in that they are designed to reduce at least two different VFTs.

9. The high-voltage device in accordance with any of the preceding claims, wherein the overall surface of said at least one transient reducing unit (120, 130) is at least 0.1 m$^2$, preferably at least 0.5 m$^2$.

10. The high-voltage device in accordance with any of the preceding claims, wherein said at least one transient reducing unit (120, 130) surrounds/covers the conducting element such that at least 25%, preferably at least 50% of the conductor element surface is encased by said at least one transient reducing unit (130).

11. The high-voltage device in accordance with any one of the preceding claims, further comprising a disconnector and/or a circuit breaker.

12. The high-voltage device in accordance with any one of the preceding claims, wherein the transient reducing unit (130) is made of one of a non-magnetic, a diamagnetic and a paramagnetic material.

13. The high-voltage device in accordance with any of the preceding claims, wherein said conducting element (121; 122; 123) defines a longitudinal axis (180) and wherein said at least one transient reducing unit (120, 130) is shaped such that an intermediate portion (170) of the transient reducing unit (130) is positioned transversely to said longitudinal axis (180) more remote than the at least one arcing occurrence surface (131; 131a; 131b; 131c; 131d; 131e).

**14.** The high-voltage device in accordance with claim 13, wherein the gap (303) has a capacitor-like gap geometry with a gap length (304) extending in the direction of the longitudinal axis (180), wherein said gap length (304) measures at least as much as a gap distance and as the case may be the gap distance respectively in between the arcing occurrence surface (131; 131a; 131b; 131c; 131d; 131e) and said conducting element (121; 122; 123).

**15.** The high-voltage device in accordance with any of the preceding claims, wherein the conducting element (121) and a shell-shaped body portion 130 of the transient reducing unit (120) delimit an interior volume (126), and wherein the conducting element (121) has a recess (300) located adjacent to the interior volume (126).

**16.** The high-voltage device in accordance with any one of the preceding claims, wherein the at least one arcing occurrence surface (131; 131a; 131b; 131c) comprises at least one radially inwardly directed protrusion (290) for locally triggering electric arcing.

**17.** A method for equipping a high-voltage device with means for reducing very fast transients (300), said high-voltage device having a conducting element (121; 122; 123) and being adapted for conducting and/or switching high currents, the method comprising

positioning at least one transient reducing unit (120, 130) for reducing voltage peaks of existing propagating very fast transients in the direct vicinity of a conducting element (121; 122; 123) such that arcing is generated between said conducting element and at least one arcing occurrence surface of said at least one transient reducing unit (130) when the transient potential difference between said transient reducing unit (130) and said conducting element (121; 122; 123) is above a threshold value, wherein said at least one arcing occurrence surface is arranged at an opposite end of at least one permanent electric contact portion (150) of the at least one transient reducing unit (130) that is conductively connected to the conducting element (121; 122; 123).

**FIG. 1**

**FIG. 2**

**FIG. 3**

**FIG. 4**

FIG. 5

# FIG. 6

**FIG. 7**

FIG. 8

# FIG. 9

FIG. 10

FIG. 11

**FIG. 12**